# EUROPEAN PATENT APPLICATION

(11) **EP 4 755 189 A1**
(43) Date of publication of application: **10.06.2026**
(21) Application number: 25157704.5
(22) Date of filing: 13.02.2025
(51) Int. Cl.: A21D 2/34, A21D 2/36, A21D 13/047, A21D 13/066

(54) **GLUTEN-FREE BREAD AND PROCESS FOR MAKING IT**

(30) Priority: 09.12.2024 EP 24307055
(71) Applicant: Bennett, Tim, 1884 Villars-sur-Ollon (CH)
(72) Inventor: Bennett, Tim, 1884 Villars-sur-Ollon (CH)
(74) Representative: Novagraaf Technologies

(57) **Abstract**

The present invention relates to a new generation of breads, combined with a new form of baking, using a particular foil container. The bread-making process comprises the steps of obtaining a dry mix comprising (per kg of the dry mix):
• from 300 to 600g of coconut flour,
• from 200 to 400g of psyllium teguments,
• from 100 to 200g of an inert plant fiber such as cellulose,
• from 200 to 400g of whey powder,
• from 20 to 100g of a raising agent,
• from 0 to 20g of a condiment such as salt;
mixing the dry mix with 325g of water per 200g of dry mix thus obtaining a substantially homogeneous hydrated mix; adding oil (preferably a vegetable oil) to the hydrated mix in an amount of 70 to 100g of oil per 200g of dry mix thus obtaining a dough; mixing the dough for 30 secs to 2 minutes; putting the dough in a perforated baking tin; baking the dough in the perforated baking container at 170 to 180°C for 50 to 70 minutes, thus obtaining a bread. The present invention has applications in bread making and baking.

## Description

### Technical field

The present invention relates to a new generation of breads, combined with a new form of baking, using a particular foil container. The present invention has applications in bread making and baking.

### Prior art

Bread has been around for a very long time, dating back over 10,000 years. It seems that the earliest forms of bread were in the form of patties of ground grain and water, baked on hot stones or in the ashes of a fire. These early breads were made from wild grains such as barley and wheat. Around 6,000 BC, the Egyptians discovered the fermentation process, which allowed bread to rise, giving rise to the first leavened bread. The process of fermenting bread spread throughout the Mediterranean, and cultures such as the Greeks and Romans developed new bread-making techniques.

In Europe, bread became a staple food in the Middle Ages. At that time, the first bakeries sprang up in towns to meet growing demand. The industrial revolution of the 19th century brought technological advances, notably the invention of the bread machine and the mass production of bread, reducing costs and making bread more widely available.

In the 20th century, the introduction of pre-sliced bread in the 1920s revolutionized the way bread was consumed, giving it an iconic place in modern diets. Today, bread is consumed in a variety of forms all over the world, with regional variations and a wide range of techniques.

Bread as we know it today can have several drawbacks. One of the main drawbacks is its high carbohydrate content, particularly in bread made from refined flour, especially white bread. This can lead to rapid blood sugar spikes, contributing to weight gain and increasing the risk of developing type 2 diabetes over time. In addition, many commercial breads contain added sugars, preservatives and artificial ingredients, which can reduce their nutritional value.

White bread, especially when consumed in large quantities, can also contribute to gluten-related problems for people with celiac disease or gluten sensitivity. In addition, it is often lower in essential vitamins and minerals than whole meal foods, making it a less nutritious option if consumed in excess.

Finally, processed bread is often lacking in fiber, which is important for digestion and maintaining a healthy intestine.

So, there is a real need for a new generation of breads and a new way of baking them.

### Summary of the invention

The present invention provides an innovative solution to the above-mentioned problems, by providing a new generation of bread-making process and of breads. The bread-making process comprises the following steps:
- obtaining a gluten free dry mix comprising, per kg of the dry mix,
   ∘ from 200 to 600g of coconut flour, preferably from 200 to 500 g,
   ∘ from 150 to 400g of psyllium husk teguments, preferably from 150 to 300g,
   ∘ from 100 to 250g of a plant fiber, for example cellulose,
   ∘ from 200 to 400g of whey powder or from 150 to 250 milk solids,
   ∘ from 0g to 50g of egg white powder
   ∘ from 5 to 100g of a raising agent,
   ∘ a condiment such as salt, for example at an amount of 0 to 8 g per 200 g of dry mix;
- mixing the dry mix with 275 to 400g of water per 200g of dry mix, for example 325 g of water per 200 g of dry mix thus obtaining a substantially homogeneous hydrated mix,
- add edible oil, preferably a vegetable oil, to the water before its mixing with the dry mix or to the hydrated mix in a quantity of 25 to 100 g of oil per 200 g of dry mix, to obtain a dough,
- mixing the dough for 30 seconds to 2 minutes,
- putting the dough in a perforated baking tin,
- baking the dough in the perforated baking tin or container at 165 to 185°C, for example 170 to 180°C, for 40 to 70 minutes, for example 50 to 70 minutes, thus obtaining a bread.

The dry mix is gluten-free, i.e. it does not contain gluten-containing flour such as wheat flour. For this reason, the inventor decided to call this bread "UnBread".

Coconut flour is a gluten-free alternative to traditional wheat flour, made by drying and grinding coconut meat. It has a mild, slightly sweet flavor and is rich in fiber, adding moisture and structure to the obtained bread or "UnBread". This flour requires specific liquid ratio as it absorbs more moisture than regular flour. It was also important to blend it with a specific combination of other ingredients to achieve the right texture, a light, airy crumb while imparting a subtle coconut flavor that complements the other ingredients used in combination in the bread-making process. In the process disclosed therein, the amount of coconut flour may be from 200 or 300 to 600g, for example from 300 to 600 g, preferably from 200 to 500 g. Psyllium or blond psyllium *(Plantago ovata)* is a plant often considered a superfood, thanks to its exceptional nutritional composition used in a variety of fields. Its fibers are not actually assimilated by the body, it is its mechanical action that generates its virtues. Psyllium or Psyllium husk or Psyllium tegument is a natural ingredient with a remarkable capacity to absorb moisture and form a gelatinous consistency. Thanks to the specific combination of ingredients used in the bread-making process presented herein, Psyllium helps to retain moisture, to hold ingredients together and to improve the structure and density of the obtained bread or "UnBread", resulting in a light, fluffy loaf. The inventor also noted that psyllium prevents the bread crumb from crumbling, while giving it a soft and chewy crumb. In the process disclosed therein, the amount of Psyllium or blond psyllium may be from 150 or 200 to 400g, preferably from 150 to 300g.

Plant fibers, for example cellulose fibers, are preferably of vegetable origin. They are preferably inert. They are not digestible by the human body but play an important role in improving the texture and structure of the bread obtained by the bread-making process disclosed herein. Plant fibers help retain moisture, giving the bread a soft, moist crumb while preventing it from becoming too dense or dry. It is also a source of dietary fiber, which promotes digestive health and contributes to a feeling of satiety. The preferred plant fibers are essentially tasteless, making them easy to incorporate into the dry mix without altering the flavor of the resulting bread. Plant fibers that can be used in the bread-making process described herein can be selected from inulin fibers (for example, inulin fibers can be extracted from chicory root), oat fibers, preferably made from the oat hull, flax seed fibers, chia seed fibers, rice bran, a by-product of rice milling, or a mixture or blend of edible plant fibers, for example a mixture or blend of two or more of the above-listed edible plant fibers. Each of these fibers not only improves the health profile of the resulting bread or "UnBread", but also contributes to improving the texture, moisture and structure of the final product when combined with the other ingredients of the dry mix involved in the process described herein. In the process disclosed therein, the amount of plant fiber may be from 100 to 200-250 g, preferably from 100 to 250 g.

Whey flour, made from dried whey proteins, improves both the texture and nutritional profile of the resulting bread or "UnBread". Whey flour is derived from the liquid by-product of cheese-making. Rich in high-quality proteins, whey flour helps to improve the structure and moisture retention of the bread or "UnBread", creating in combination with the other ingredients a softer, chewier crumb. Whey flour adds a mild, slightly sweet flavor. The addition of whey flour also increases the protein content of the resulting breads or "UnBreads", making them more nourishing and giving them a nutritional edge. The resulting bread or "UnBread" is therefore particularly beneficial for athletes or people on a high-protein diet. In some cases, whey flour may also help to reduce the glycemic index. In the process disclosed therein, the amount of whey flour may be from 200 to 400g.

Milk solids are the components of milk that remain one the water content has been removed. They originate from raw milk and consist primarily of proteins, lactose and mineral, with or without milk fat, depending on the type. The milk solids offer several advantages in the process and bread disclosed therein. This ingredient improves both texture and flavor of the bread. Their concentrated protein and lactose content help create a tender crumb while enhancing moisture retention, which keeps the bread fresh for longer. They also contribute to an appealing golden-brown color through the Maillard reaction and enrich the overall taste with a subtle, creamy depth. Additionally, milk solids play a role in stabilizing fat emulsions, leading to a more uniform structure and reducing the likelihood of the bread collapsing. They help create consistency and stability. Their dry, concentrated form allows for easy integration into the dry mix, ensuring consistency and simplifying the production process. In the process disclosed therein, the amount of milk solids may be from 150 to 250g.

According to the process disclosed therein, a mixture of whey powder and milk solids may also be used, with a weight ratio of 1:99 to 99:1, for example 20:80 to 80:20, for example 40:60 to 60:40. In this case, the amount of this mixture in the dry mix may be from 150 to 400 g/

Egg white powder can also be added to the dry mix, in addition to the whey flour or coconut flour or to replace part of it. In the process disclosed therein, the amount of egg white powder may be from 0 to 50 g. When the egg powder replaces partly the whey flour and/or coconut flour in the dry mix, egg white powder may represent for example 2 to 10 wt. % of the whey flour and/or coconut flour, or alternatively 1 to 5 wt. % of egg white powder can be added to the dry mix, with reference to the total weight of the dry mix.

The raising agent, also named leavening agent, allows to achieve light, airy texture of the obtained bread or "UnBread". It can be of any known kind, preferably baking soda or baking powder, preferably baking powder, which contains both an acid and a base. Also, sodium bicarbonate or "BICARB" may be used. The amount of raising agent to be added is from 5 to 100 g, for example from 20 to 100 g.

Cream of tartar, or potassium bitartrate, can also be added to the dry mix. This ingredient may advantageously further improve the dough stability and enhance the final texture of the UnBread. It acts as a dough conditioner, helping to improve the UnBread's rise and overall stability. Typically, a small amount of cream of tartar may be added, for example about 0.1 to 1 wt.%, for example from 0.1 to 0.5 wt.%, with reference to the total weight of the dry mix.

The mix also comprises a condiment, such as salt, in an amount of from 0 g, for example for a salt-free diet, i.e. 0g to about 20 g to 40g per kg of dry mix, i.e. 0 to 4 to 8 g / kg of dry mix, to taste. The condiment may also be or further comprise one, two or more of the following: pepper, pepper, chili pepper, celery salt, curry powder, cumin, paprika, ginger, and any other spice or herb, to enhance the UnBread taste according to the consumer's taste. This or these condiment(s) may be added to the dry mix composition, before or after adding the water.

Once the dry ingredients have been brought together, they are preferably dry-mixed, to obtain a homogeneous dry blend or premix of the ingredients. The inventor also plans to market a dry mix or "premix" already prepared based on these ingredients for use in the bread-making process disclosed herein. The inventor therefore also provides herein a dry mix comprising, per kg of the dry mix:
∘ from 200 to 600g of coconut flour, preferably from 200 to 500 g,
∘ from 150 to 400g of psyllium husk teguments, preferably from 150 to 300g,
∘ from 100 to 250g of a plant fiber, for example cellulose,
∘ from 200 to 400g of whey powder or from 150 to 250 milk solids,
∘ from 0g to 50g of egg white powder
∘ from 5 to 100g of a raising agent,
∘ a condiment such as salt, for example from 0 to 8 g per 200 g of dry mix;

These ingredients are as defined above. For the reason indicated above for the name "UnBread", the dry mix was named "UnBread flour mix" or "UnBread flour premix" by the inventor. It was also named "UnBread bread loaf and roll flour mix" or "UnBread bread loaf and roll flour premix".

In the process disclosed herein, the water may be added at once to the dry mix or, preferably, added by adding to the dry mix, per portion of 200g of dry mix, a mixture of 135 to 200g of boiling water and 135 to 200 g of cold tap water for example, for example 200 g of boiling water to 125g of cold tap water. This ensures the optimum temperature for mixing with the dry mix or premix, according to the process disclosed herein.

The step of adding oil, preferably a vegetable oil, to the water or to the hydrated mix in an amount of 25 to 100g of oil per 200g of dry mix is preferably carried out with a vegetable oil. The oil can be selected for example from the group comprising olive oil, sunflower oil, canola oil, soybean oil, corn oil, avocado oil, coconut oil, grapeseed oil, peanut oil, vegetable shortening, coconut fat or shortening, cocoa butter or plant-based margarin, or a mixture of two or more of these oils. Each of these oils can provide a slightly different flavor and texture to the bread. Preferably, the oil is coconut oil or olive oil or a mixture of these oils. Preferably, a 50/50 blend of coconut and olive oil. The oil may be added at the same time as the water in the dry mix or after the step of mixing the dry mix with the water.

The oil may be added as such to the dry mix or to the water or to the hydrated mix. The oil is preferably warmed at a temperature of from 30-80°C, preferably from 60 to 80°C, before being added to the dry mix or to the water or to the hydrated mix. This results in a better blend with the dough. The oil can be heated in a microwave oven or on a stove.

When the water and the oil have been added, the dough may be mixed by any suitable means to obtain a homogeneous and compact dough, except for a kneading hook which should preferably not be used in the process disclosed herein. Preferably, the dough is mixed with a paddle or a K beater, preferably in a standing mixer. For example, the dough may be mixed in a standing mixer at a speed of 75-95 to 200 rpm (medium to high speed) for 20 to 40 s, preferably for 30 s, until a homogeneous stiff dough has formed.

The dough may also be mixed with a hand mixer or a spoon, for example a wooden spoon, until a homogeneous stiff dough has formed. When the dough is mixed with a hand mixer or spoon, the bread is slightly denser with a lower overall volume than when mixed with the stand mixer. Advantageously, this defect is overcome by adding from 5 to 15g of water to the dough during mixing, preferably about 10g of water.

In the process provided herein by the inventor, at least one of the following ingredients may optionally further be added to the dry mix and/or to the hydrated mix and/or to the dough: garlic powder or blended fresh garlic, parmesan or other powdered or grated hard cheese, for example Italian hard cheese, Provence or other herb mix, blended or preferably very finely chopped sundried tomatoes, preferably into an oil, blended or very finely chopped olives, preferably into an oil, finely chopped onion, preferably into an oil, honey, health mix of choice, seed mix and chopped nuts, truffle, truffle oil, or a mix of two or more of these ingredients. When one or several of these additional ingredient(s) is/are used, preferably, the prepared bread or "UnBread should be kept in the fridge to ensure it to stay fresh. When the additional ingredient(s) used are packaged into an oil, the oil added during the baking process can be lowered, to take into account the oil of said ingredient(s). The obtained dough may then be molded into a cohesive ball, for example with the hands or a spoon, for example a wood or silicon spoon, then into a flat plate or slab of a size adapted to the bottom of the perforated baking mold or tin or container. The baking container, also named "container" or "baking tin" or "tin" by the inventor, can be of any suitable shape, as long as it is perforated. The shape of the baking container or tin can be chosen according to the desired bread shape. Preferably, the baking container or tin is rectangular or circular. For example, when the baking container or tin is rectangular, the baking container or tin has preferably a size of 160-220 mm long, 70-110 mm wide and 60-80 mm high for a dough made starting from a 200g of dry mix or premix.

In the present description, unless otherwise indicated, the term 'container', 'mold' or 'tin' is used interchangeably to refer to a container that can be used to implement the invention process, i.e. to bake the dough according to the process defined herein, i.e. a 'container', 'mold' or 'tin' with perforations. The perforated container or tin disclosed therein is preferably perforated over practically its entire surface, while allowing it to be held to contain the dough, for handling and during baking, with a diameter of the perforations substantially identical, preferably to 1.4 to 3 mm, preferably to 1.4 to 2 mm, for example 1.4 to 1.8. For example, it can have a width or center of from 3 to 6 mm, for example 3 to 4, with strips or webs of 1.4 to 4 mm, for example 1.4 to 2 mm. An example of perforated container is presented in the examples part below and in the annexed figures. As a perforated baking container or tin, it can also be a container in the form of a fine mesh, preferably with an aperture of 1.4 x 3 mm, for example of 1.4 x 1.6 mm, for example 1.5 x 1.5 mm, preferably 1.8 x 1.8 mm, and a mesh wire size of 0.1 to 1 mm, preferably 0.3 to 1 mm, preferably 0.15 mm. The inventor has noted that if the holes are too numerous or too large, the dough oozes through the openings and binds to the container, resulting in a baked loaf with an overly thick, dried-out crust, whereas too few or too small holes, the UnBread sinks or collapses into a ball of dough at the end of baking, due to a crust that is too moist and soft, and insufficient structure to support the bread's inner mass. The baking container may be a food-grade perforated metal container, for example aluminum or food-grade stainless steel, heat- and moisture-resistant perforated cardboard container or perforated silicon container or perforated aluminum foil container, preferably a food-grade perforated metal container, preferably a non-stick food-grade perforated metal container.

To bake the dough, in the baking step, the perforated mold or tin or container containing the dough is placed in an oven at a temperature of 170 to 180°C for 50 to 70 minutes, producing a loaf of bread or "UnBread". Preferably, the temperature is kept constant throughout the cooking process. Preferably, the oven should not be open to prevent the loaf from collapsing. Bake time may vary somewhat depending on oven type and efficiency. In doubt, preferably bake longer rather than shorter. When bread dough is placed in the hot oven, the water it contains heats up and begins to evaporate, creating steam. This steam is essential, in combination with the perforated container or mold or tin, for the initial rising of the bread, known as "oven spring". Heated water in the dough also reacts with leavening agents, such as baking powder or baking soda, creating gas bubbles, while steam inflates these gas bubbles and increases their volume. In the process provided herein, the generated steam is a powerful leavening agent because when water turns to steam, when present, it can expand to over 1,600 times its original volume. This rapid expansion, combined with the effects of the leavening agents when present, allows the dough to rise quickly before the crust sets, while the crust develops and stabilizes quickly and completely as the supporting structure of the resulting bread or "UnBread". The process proposed here, combining the dry mix as starting material, the step of the baking-process and the perforated tin, enables the bread to "rise" by aeration, thanks to the perforations in the container and the steam generated from the water of the dough, rather than by yeast or other means.

After the cooking step, the bread is preferably left in the baking container or mold or tin for about 15-20 minutes to cool, preferably at least 15 minutes, before removing the bread from the tin.

The inventor therefore also provides herein a bread or "UnBread" obtained by the process disclosed herein. The dry mix or "UnBread flour" premix formula has preferably one or several the following attributes relevant to this combined dry mix or premix and process: gluten free, starch free, yeast free, preservative free, low in carbohydrates, no artificial ingredients, no GMO products, no xanthan, guar or any other gum, no aluminium raising agent. Also, the Unbread can advantageously be sugar-free, as defined therein with the premix.

The UnBread premix formulation, i.e. dry mix, combined with the UnBread perforated foil container or tin, enables any baker to create a baked loaf which very closely emulates the defining properties of a conventional grain-based bread loaf, whilst using ingredients that do not contain either gluten or starch, both of which are critical in normal conventional bread to creating its expected defining structure and properties.

The unique synergies between the ingredients in UnBread's premixed proportions as disclosed above, i.e. the dry mix, and their reaction during baking with the perforated foil baking tin or mold or container, named by the inventor "perforated foil UnBread baking container" or "perforated foil UnBread baking tin", results in a bread emulator which is superior to any other all-natural product in this category. It is the combination of the ingredients, steps and perforated tin or mold or container, i.e. of the elements of the process described herein, that contributes to obtaining a bread or "UnBread" with the expected characteristics of a loaf, and more.

By working on these interactions, steam production, ingredient functionality and container design for the baking step, the inventor has implemented the particular combination of: the composition of the dry mix, the process described herein and the perforated tin or mold or container, resulting in a unique, gluten-free, low-carbohydrate bread or "UnBread" with optimal rise and the crust characteristics necessary to achieve a beautiful bread or "UnBread" loaf. The synergy produced by this combination led to the successful baking of "UnBread" bread, with all the above qualities and that is super healthy.

Further features and advantages of the invention will become apparent from the following detailed description, for the understanding of which reference is made to the appended drawings.

### Brief description of the drawings

- Figure 1: represents a side view of the longitudinal side of a perforated baking tin or mold or container used in the process of the invention.
- Figure 2: represents a side view of the width side of the perforated baking tin or mold or container represented in figure 1.
- Figure 3: shows a top view of the perforated baking tin or mold or container represented in figure 1.
- Figure 4: shows an overall 3-dimensional view of the perforated baking tin or mold or container represented in figure 1.

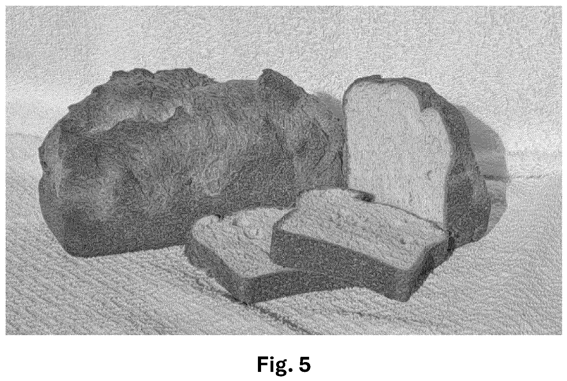

- Figure 5: shows a picture of a bread obtained with the dry mix, process and perforated baking container disclosed therein.

In the following description, illustrated by the appended figures, the inventor presents illustrative embodiments of the present invention.

### EXAMPLES

### Example 1: Examples of dry mix

Different dry mixes are prepared by mixing together the following ingredients

| **Ingredients** | **DM 1 (g)** | **DM 2 (g)** | **DM 3 (g)** | **DM 4 (g)** | **DM 5 (g)** | **DM 6 (g)** |
|---|---|---|---|---|---|---|
| coconut flour | 300 | 340 | 380 | 300 | 340 | 450 |
| psyllium teguments | 375 | 210 | 200 | 350 | 250 | 150 |
| food grade carboxymethylcellulose | 100 | 150 | 195 | 100 | 125 | 200 |
| whey powder | 200 | 250 | 200 | 225 | 175 | 125 |
| Egg white powder | - | - | - | 0 | 15 | 10 |
| baking soda | 20 | 50 | 20 | 15 | 75 | 25 |
| Condiment: salt | 5 | 0 | 5 | 10 | 20 | 40 |
| Total | 1,000 | 1,000 | 1,000 | 1,000 | 1,000 | 1,000 |

| | | | | | | |
|---|---|---|---|---|---|---|
| *DM = "Dry Mix" or "dry premix" | | | | | | |

For each example, DM1 to DM6, the ingredients for the dry mix are mixed or whisked to form a substantially homogeneous premix suitable to carry out the baking-process disclosed herein.

### Example 2: example of making a bread with the process provided by the inventor

The oven was preheated to 175°C. 200 ml of water was boiled in a kettle. At the same time, 80g of a 50/50 mix of coconut oil and olive oil was heated for 1 min in the microwave, for example at a frequence form 600 to 900W.

200g of the UnBread flour mix prepared as in Example 1 was mixed with about 3g of salt, to taste, 200g of hot boiling water, 125g of cold tap water, for a total of 325g of water, and 50g of the warmed mix of coconut oil and olive oil.

In another test, hot and cold water were added to the mixing bowl, then the oil was heated, the mixture was stirred for at least 5 seconds, then the 200g of mix was added to the bowl.

The ingredients were mixed gently with a wooden spoon for 10 seconds to combine the wet and dry ingredients without spilling. The mixture was then blended at high speed in a stand mixer, at 90 rpm or preferably 200, for exactly 30 seconds.

The same paste was prepared in parallel, using the above proportions, but mixing it by hand for 2 minutes or until a stiff dough has formed. In yet another test, we added 10g of water to this hand-mixed paste.

The dough was then removed from the mixing bowl in each case, and a cohesive ball of dough was formed with the wooden spoon.

Next, the inventor gently shaped the dough into a flat sheet or slab approximately 180 mm long x 80 mm wide and 40 mm high and inserted it into the perforated baking tin / container disclosed in example 4 below.

Although optional, the inventor then brushed the top of the dough with oil. The inventor noted that this improved the rise and volume of the resulting loaf.

In some tests, 3, 4 to 8 diagonal cuts or marks were made on the top and along the length of the slab (disc), 6 to 8 mm deep, using an oil-coated blade to prevent sticking. This allowed the bread to rise more evenly during baking.

The perforated tin / container containing the dough was then placed in the oven, preheated to 175°C, for 60 minutes, until the bread was cooked through.

Comparative examples were made in a mold, as baking tin without perforations. In these comparative examples, the bread was observed to rise, then to collapse during baking. The combination of ingredients and amounts, and the perforated tin/container used by the inventor, allow water vapor to escape, stimulating and maintaining bread rising and forming the bread crust.

The dough prepared by hand mixing without adding water resulted in a less leavened, denser loaf. The dough prepared by manual mixing with the addition of 10g of water resulted in a well-risen, airy loaf.

Alternative tests were also carried out, starting from each of the dry mixes presented in Example 1, by adding in a mixing bowl 150 g of water at room temperature, i.e. at about 21°C, to 160 g of boiling water, in order to obtain a preferred temperature. The inventor then added to the water mixture 25g of coconut oil, heated for 30 seconds or 1 minute in the microwave at 600 to 900W, and stirred for about 5 seconds. He then added 185g of the dry mix to the bowl and kneaded at low speed for 10 seconds, i.e. 30-40rpm, preferably 60-70 rpm, and then at high speed for 30 seconds at least at 90rpm, preferably 200 rpm. The dough became very stiff. The dough was scraped from the bowl and kneaded, then shaped into a 180 x 80 mm plate or slab and placed in the perforated baking tin and baked as above.

In the tests presented in examples 1 and 2, the inventor noted that the oven should preferably not be opened during baking, to prevent the dough from collapsing. The inventor also noted that the baking time can vary somewhat depending on the type of oven and its efficiency, and that it is preferable to bake the bread a little longer than not long enough, to prevent the bread from collapsing.

The inventor also noted that the resulting "just-baked" bread need preferably to be handled with great care, as they may occasionally deflate easily when hot. So, it is better to let the bread cool in the perforated tin, preferably for about 15 minutes, then carefully remove from the mold or tin/container and place the bread on a cooling rack.

The breads obtained thanks to the process and dry mix developed by the inventor have an exceptional taste and the same texture as normal bread for all dry mixes disclosed above. Once cooled, they can be toasted or reheated. They can also be grilled, preferably in an air fryer or in the oven, for example at 200°C for 5 minutes or more, to taste.

The numerous tests carried out have shown that the UnBreads obtained keep well, like classic breads, or even better, especially in the refrigerator, for a shelf life of around 5 to 7 days.

The inventor has also determined that the resulting UnBreads can be frozen. Thawing is rapid and perfect, with no perceptible change in texture, taste or appearance. The UnBreads can even be sliced in the frozen state, for example with a serrated bread knife.

The inventor has also carried out tests by adding different flavor ingredients to dry mixes as disclosed in example 1, for example garlic powder of blended fresh garlic, parmesan or other powdered or grated hard cheese, herb mix, such as Italian or Provence herb mix, finely chopped sundried tomatoes, chopped olives, finely chopped onion, honey, dates, health mix, seed mix, chopped nuts, banana, and even fresh banana.

Delicious UnBreads have been obtained thanks to the process described herein.

### Example 3: nutritional analysis

In this example, the nutritional analysis of UnBreads obtained from the premix of example 1 is presented. For a 40g slice of bread, Table 1 below shows the nutritional facts.

**Tables 1 and 2: Nutrition facts**

| **Nutrition Facts** | | | **Nutrition Facts** | | |
|---|---|---|---|---|---|
| Serving Size 1x SLICE | | | Serving Size 1 Slice 40g average (10 Slices per loaf) | | |
| Serves 1 | | | Serves 1 | | |
| **Amount Per Serving** | | | **Amount Per Serving** | | |
| **Calories** | | 75 | **Calories** | | 47 |
| | | **% Daily Value*** | | | **% Daily Value*** |
| **Total Fat** 5.3g | | **7%** | **Total Fat** 0.4g | | **1%** |
| | Saturated Fat 4.4g | | | Saturated Fat 0.3g | |
| | Trans Fat 0g | | | Trans Fat 0g | |
| | Polyunsaturated Fat 0.1g | | | Polyunsaturated Fat 0g | |
| | Monounsaturated Fat 0.3g | **0%** | | Monounsaturated Fat 0g | **0%** |
| **Cholesterol** 0.1mg | | **0%** | **Cholesterol** 0.4mg | | **0%** |
| **Sodium** 136.3mg | | **6%** | **Sodium** 227mg | | **10%** |
| **Total Carbohydrate** 6.7g | | **2%** | **Total Carbohydrate** 11.6g | | **4%** |
| | Dietary Fiber 5.1g | **18%** | | Dietary Fiber 6.6g | **24%** |
| | Sugars 0.8g | | | Sugars 3.8g | |
| **Protein** 1.8g | | **4%** | **Protein** 2.2g | | **4%** |

| | | | | | |
|---|---|---|---|---|---|
| Left table = table 1 = dry mix 1 of example 1. Right table = table 2 = dry mix 2 of example 1. | | | | | |

### Example 4: perforated baking container or tin

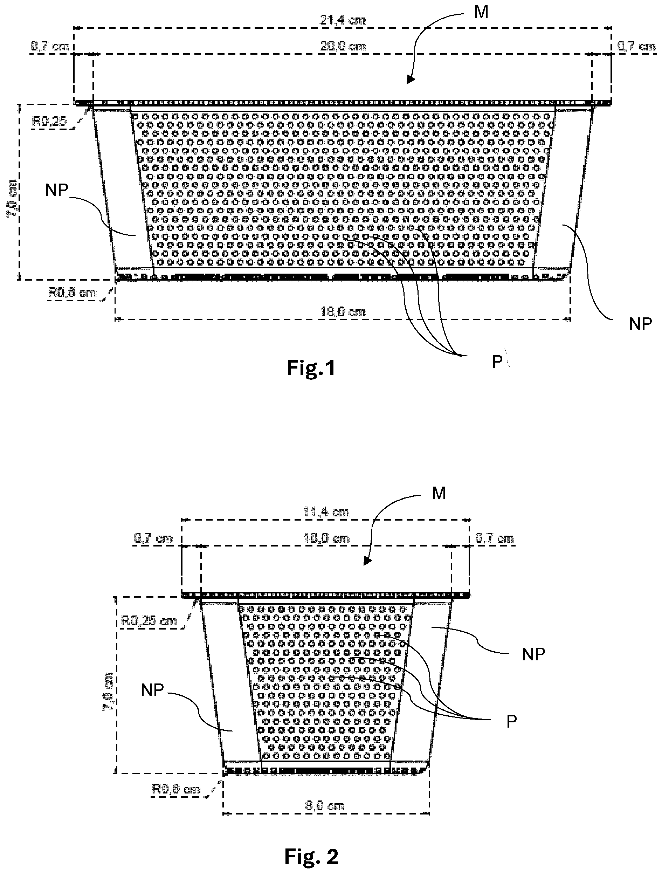

The perforated container used in example 2 for carrying out the process disclosed herein is represented by the drawings of annexed figures 1-4. The measurements of the container are indicated in cm.

On these drawings, the perforated container is referenced "M", the perforations or holes of the container are referenced "P", and the non-perforated parts of the container are referenced "NP". Of course, the 'P' references are not given for every hole of the tin, but the drawings speak for themselves.

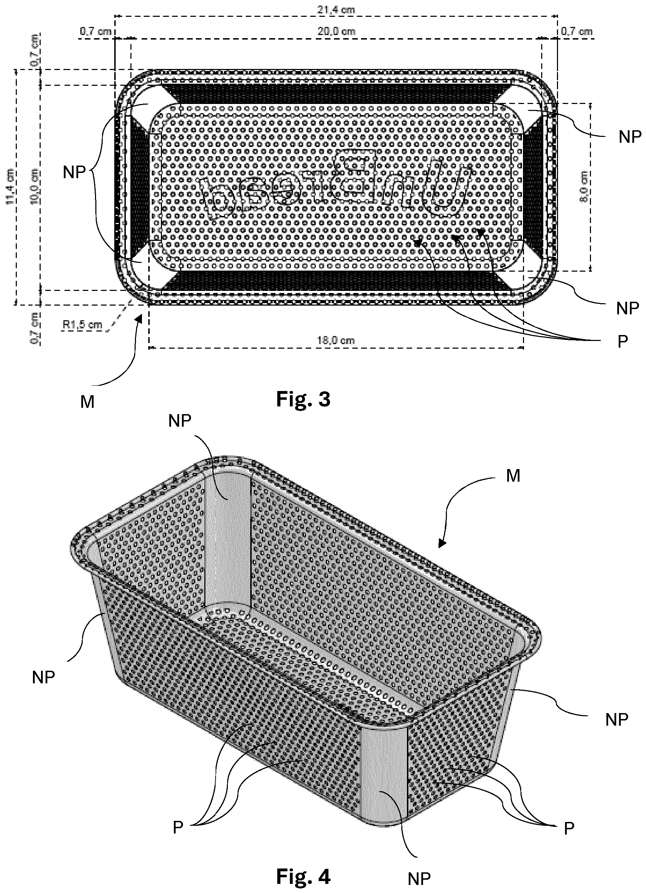

Figure 1 represents a side view of the longitudinal side of a perforated baking container M used in the process disclosed herein. Figure 2 represents a side view of the width side of the perforated baking container represented in figure 1. Figure 3 shows a top view of the perforated baking container represented in figure 1. Figure 4 shows an overall 3-dimensional view of the perforated baking container M represented in figure 1.

The container disclosed in this example is made of aluminum. The diameter of the perforations or holes P of the represented baking container is on a rough average of 0.18 mm, and more precisely from 1.4 to 3 mm. The perforations or holes are made on the entire surface of the baking tin/container or mold, apart from the vertical and longitudinal edges and width (referenced by "NP"), which ensures that the baking container remains firmly in place when the dough is placed in it, including when placing the baking container containing the dough in the oven, removing it from the oven and unmolding the UnBread.

This baking tin/container has enabled the process disclosed therein, based on the compositions and process described in example 1, and to obtain excellent UnBreads, with all the desired characteristics of crust, aeration of the crumb and suppleness.

## Claims

1. A bread-making process comprising the following steps:
- obtaining a gluten free dry mix comprising, per kg of the dry mix,
o from 200 to 600g of coconut flour, preferably from 200 to 500 g;
o from 150 to 400g of psyllium husk teguments, preferably from 150 to 300g;
o from 100 to 250g of a plant fiber, for example cellulose;
o from 200 to 400g of whey powder or from 150 to 250 milk solids;
o from 0g to 50g of egg white powder;
o from 5 to 100g of a raising agent; and
o a condiment such as salt.
- mixing the dry mix with 275 to 400g of water per 200g of dry mix thus obtaining a substantially homogeneous hydrated mix,
- add edible oil, preferably a vegetable oil, to the water before its mixing with the dry mix or to the hydrated mix in a quantity of 25 to 100 g of oil per 200 g of dry mix, to obtain a dough,
- mixing the dough for 30 secs to 2 minutes,
- putting the dough in a perforated baking tin,
- baking the dough in the perforated baking container at 170 to 180°C for 50 to 70 minutes, thus obtaining a bread.

2. A bread-making process according to claim 1, in which water is added by adding to the dry mix, for 200g of dry mix, a mixture of 200g of boiling water and 125g of cold tap water.

3. A bread-making process according to claim 1 or 2, wherein the oil is warmed at a temperature of from 30-80°C, preferably 60-80°C, before being added to the hydrated mix.

4. A bread-making process according to any of the preceding claims, wherein the dough is mixed with a paddle or a K beater.

5. A bread-making process according to any of the preceding claims, wherein the dough is mixed in a stand mixer at a speed of 75 to 200 rpm (medium to high speed) for 20 to 40 secs, preferably for 30 secs, until a homogeneous stiff dough has formed.

6. A bread-making process according to any of claim 1-3, wherein the dough is mixed with a hand mixer or a spoon until a homogeneous stiff dough has formed.

7. A bread-making process according to one of the preceding claims, in which the dough is molded into a cohesive ball, then into a flat plate or slab of a size adapted to the bottom of the perforated baking mold.

8. A bread-making process according to one of the preceding claims, in which the perforated baking container has a size of 160-220 mm long, 70-110 mm wide and 60-80 mm high for a dough obtained from 200g of dry mix.

9. A bread-making process according to one of the preceding claims, in which the perforated container is perforated over practically its entire surface, while allowing it to be held to contain the dough, for handling and during baking, with a diameter of the perforations substantially identical and equal to 1 to 3 mm, preferably 1.4 to 2 mm.

10. A bread-making process according to any of the preceding claims, in which the perforated container is a food-grade perforated metal tin, or heat- and moisture-resistant perforated cardboard container or perforated silicon container or perforated aluminum foil tin.

11. A bread-making process according to one of the preceding claims, wherein the loaf is left in the baking container for about 15 minutes to cool, before removing the bread from the tin.

12. A bread-making process according to one of the preceding claims, wherein at least one of the following ingredients is added to the dry mix or hydrated mix or dough: garlic powder or blended fresh garlic, parmesan or other powdered or grated hard cheese, Italian, Provence or other herb mix, blended or very finely chopped sundried tomatoes, blended or very finely chopped olives, finely chopped onion, honey, health mix of choice, seed mix, chopped nuts, banana.

13. A bread obtained by a process according to any one of claims 1-12.

14. A dry mix comprising, per kg of the dry mix,
- from 200 to 600g of coconut flour, preferably from 200 to 500 g;
- from 150 to 400g of psyllium husk teguments, preferably from 150 to 300g;
- from 100 to 250g of a plant fiber, for example cellulose;
- from 200 to 400g of whey powder or from 150 to 250 milk solids;
- from 0g to 50g of egg white powder;
- from 5 to 100g of a raising agent; and
- a condiment such as salt.
